(19) **Europäisches Patentamt**
**European Patent Office**
**Office européen des brevets**

(11) **EP 3 318 932 B1**

(12) **EUROPEAN PATENT SPECIFICATION**

(45) Date of publication and mention
of the grant of the patent:
**27.07.2022 Bulletin 2022/30**

(21) Application number: **17200027.5**

(22) Date of filing: **03.11.2017**

(51) International Patent Classification (IPC):
**G03H 1/00** *(2006.01)* **G01N 21/00** *(2006.01)*
**G03H 1/04** *(2006.01)*

(52) Cooperative Patent Classification (CPC):
**G01N 21/00; G03H 1/00; G03H 1/0443;**
G03H 2001/005; G03H 2001/0447; G03H 2210/62

(54) **SYSTEM AND METHOD FOR THE REMOVAL OF TWIN-IMAGE ARTIFACT IN LENS FREE IMAGING**

SYSTEM UND VERFAHREN ZUR ENTFERNUNG EINES DOPPELBILDARTEFAKTS IN LINSENLOSER BILDGEBUNG

SYSTÈME ET PROCÉDÉ DE RETRAIT DE LENTILLES D'ARTÉFACT D'IMAGES DOUBLES EN IMAGERIE SANS LENTILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2016 US 201662417697 P**

(43) Date of publication of application:
**09.05.2018 Bulletin 2018/19**

(73) Proprietor: **miDiagnostics NV**
**3001 Heverlee (BE)**

(72) Inventors:
• **HAEFFELE, Benjamin D.**
**Oakland, CA 94609 (US)**
• **VIDAL, Rene**
**Baltimore, MD 21218 (US)**

(74) Representative: **AWA Sweden AB**
**Box 5117**
**200 71 Malmö (SE)**

(56) References cited:
• **JUN SONG ET AL: "Sparsity-Based Pixel Super Resolution for Lens-Free Digital In-line Holography", SCIENTIFIC REPORTS, vol. 6, no. 1, 21 April 2016 (2016-04-21), XP055458715, DOI: 10.1038/srep24681**
• **THILAGAVATHI M ET AL: "An efficient dictionary learning algorithm for 3d Medical Image Denoising based on Sadct", INFORMATION COMMUNICATION AND EMBEDDED SYSTEMS (ICICES), 2013 INTERNATIONAL CONFERENCE ON, IEEE, 21 February 2013 (2013-02-21), pages 442-447, XP032383876, DOI: 10.1109/ICICES.2013.6508257 ISBN: 978-1-4673-5786-9**

EP 3 318 932 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Processed by Luminess, 75001 PARIS (FR)

EP 3 318 932 B1

**Description**

**BACKGROUND**

The present disclosure relates to a system and a method for separating cell structure in a holographic image from background elements in the holographic image.

Holographic lens-free imaging (LFI) is a microscopy technique that functions by attempting to reconstruct images of a specimen from a diffraction pattern that is generated by passing a coherent light source *(e.g.,* a laser) through the specimen. In essence, as light is diffracted by an object, the light waves are distorted and form an interference pattern. The diffracted light is then detected by a detector (typically a charge-coupled device (CCD) or active pixel sensor (APS) photodetector) which measures and stores holographic data, *i.e.,* the amplitude of the light at a given pixel. The object image is then reconstructed using a variety of mathematical techniques.

LFI has several advantages over conventional microscopy. First, because there are no lenses in the imaging system, its overall cost and physical size can be greatly reduced compared to traditional microscopes. Second, LFI allows much wider fields of view to be imaged than a conventional microscope with equal magnification. Third, because the image of the specimen is generated through post-processing the recorded diffraction pattern, there is no need for an operator to manually focus the system as the focal depth can be adjusted automatically through post-processing.

These advantages have led to LFI being explored as a potential method to track or detect various types of cells in solution over a large field of view (and potentially in 3 dimensions) with notable success. However, many of these techniques either rely on complex models of the light diffraction process, which can be expensive to fit computationally, or assume that the cells to be detected/tracked are sufficiently separated so that the holograms generated by the cells have minimal interaction and can be easily fit assuming the holograms are generated independently of other cells in the volume.

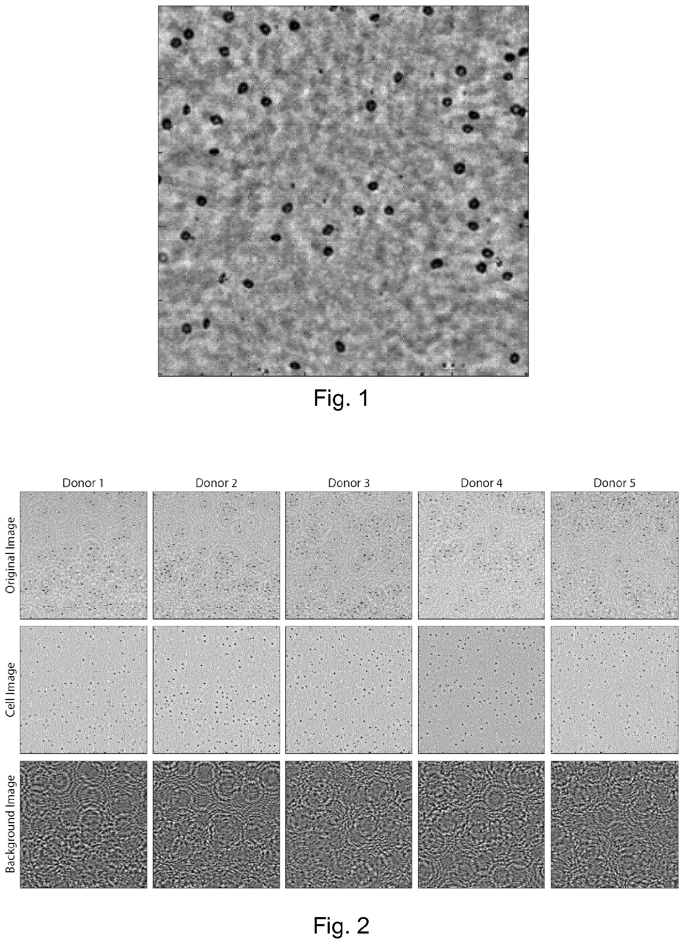

When the concentration of cells (or more generally objects) increases, the holograms generated by different objects begin to combine before being detected by the imaging sensor. While the superposition of holographic waves could be resolved if imaging sensors recorded both the magnitude and phase of the hologram wavefront, usually only the magnitude is recorded. As a result, images reconstructed via traditional holographic image reconstruction techniques are typically corrupted by significant artifacts that are a consequence of not capturing the phase information of the diffraction pattern. This problem is commonly referred to as the twin-image artifact, which inherently limits the quality of the image produced. For example, when imaging blood cells, reconstructed images have a twin-image artifact characterized by wavy, ring-like patterns emanating from the image of the specimen. Figure 1 is a traditional holographic reconstruction produced using reconstruction and depicts this twin-image distortion/artifact.

To address this issue, prior work has focused largely on techniques to estimate the missing phase information followed by standard holographic reconstruction techniques. However, the problem of estimating both the reconstructed image along with the missing phase is typically an ill-posed and under-determined inverse problem, hence assumptions regarding the expected statistical or geometrical properties of the reconstructed image are typically necessary to bound the space of solutions and make the problem tractable.

Additionally, some techniques attempting to eliminate twin-image artifacts require more sophisticated image analysis methods or more advanced reconstruction methods. However, sophisticated image analysis algorithms and advanced reconstruction methods may prohibitively delay full image analysis and can have limited success in accurately reproducing the image of the object from the diffraction pattern.

It would therefore be advantageous to provide a method of processing holographic image reconstructions which removes artifacts and improves the clarity and quality of the holographic image. Jun Song et al ("Sparsity-Based Pixel Super Resolution for Lens-Free Digital In-line Holography", SCIENTIFIC REPORTS, vol. 6, no. 1, 21 April 2016) discusses lens-free digital in-line holography for portable, wide field-of-view imaging. Thilagavathi M et al ("An efficient dictionary learning algorithm for 3d Medical Image Denoising based on Sadct", INFORMATION COMMUNICATION AND EMBEDDED SYSTEMS (ICICES), 2013 INTERNATIONAL CONFERENCE ON, IEEE, 21 February 2013, pages 442-447) discusses signal denoising which is a process of removing noise signals from a noisy image.

**SUMMARY**

The foregoing needs are met, to a great extent, by the present disclosure. The present inventions are defined in the independent claims. Variants of the present inventions are given in the dependent claims. The presently-disclosed techniques utilize a method which operates under the assumption that the true image of the object is sparse, but takes a fundamentally different approach from phase recovery techniques. In particular, instead of attempting to recover the missing phase as a part of the reconstruction, twin-image artifacts are removed through a post-processing step based on sparse dictionary learning and coding, which allows one to separate a reconstructed image into components corresponding largely to the true image of the object and the twin-image artifact in an unsupervised manner. In one aspect, a traditional holographic reconstruction is subdivided into patches to build a dictionary of elements, where each patch is reconstructed as a weighted sum of several of the dictionary elements with each atom in the dictionary being sorted into object and background dictionaries, where the holographic image is then reconstructed by each patch using this information to remove the background from the object.

In one aspect, with respect to classical sparse dictionary learning methods for image denoising, which use a single dictionary for the foreground and can handle primarily Gaussian noise as background, the presently-disclosed method uses separate dictionaries for the foreground and background, with the background dictionary being designed specifically to model twin-image artifacts. In one aspect, the method is unsupervised, so that the user does not need to specify *a priori* which patches correspond to foreground and which patches correspond to background. In one aspect, particularly with respect to classical twin-image artifact removal algorithms that are based on first estimating the phase and then performing holographic reconstruction, embodiments disclosed here provide for a post-processing operation to any reconstruction algorithm, without requiring a phase estimation step.

## BRIEF DESCRIPTION OF THE DRAWINGS

For a fuller understanding of the nature and objects of the disclosure, reference should be made to the following detailed description taken in conjunction with the accompanying drawings, in which:

Figure 1 is a reconstructed image of blood that includes both the true images of blood cells and twin-image artifacts;

Figure 2 is a set of example image decompositions for one example image from each of five blood donors, wherein the top row of images contains the original images, the middle row contains images reconstructed from cell dictionary atoms and coefficients, and the bottom row contains images reconstructed from background dictionary atoms and coefficients (note that the images have different gray-scale scalings to improve the contrast);

Figure 3 depicts a dictionary learned from an image of whole blood captured using lens-free imaging and sorted by $\ell_1$ norm (in ascending order), in the image, the first 130 atoms (roughly, the top six rows) were used as the cell dictionary and the remaining 486 atoms were used as the background dictionary;

Figure 4A illustrates an exemplary reconstruction of an image patch containing a red blood cell, wherein the original image patch (left image patch) is approximated as the weighted sum of the dictionary atoms (middle three image patches) to produce the reconstruction (right image patch);

Figure 4B illustrates an exemplary reconstruction of an image patch containing only background *(i.e.,* no cells), wherein the original image patch (left image patch) is approximated as the weighted sum of the dictionary atoms (middle three image patches) to produce the reconstruction (right image patch);

Figure 5A is an image of blood captured using lens-free imaging;

Figure 5B is a reconstruction of the image of Figure 5A, wherein the reconstruction was generated using a structure image dictionary made from a red blood cell training image;

Figure 5C is a reconstruction of the image of Figure 5A, wherein the reconstruction was generated using a background dictionary made from a red blood cell training image;

Figure 6 is a chart showing a method according to an embodiment of the present disclosure;

Figure 7 is a chart showing a method according to another embodiment of the present disclosure;

Figure 8 is a diagram depicting acquisition of a hologram;

Figure 9 depicts local reconstruction of the hologram acquired in Figure 7; and

Figure 10 depicts remote reconstruction of the hologram acquired in Figure 7.

## DETAILED DESCRIPTION

The algorithmic approach selected for the method utilizes a patch-based sparse dictionary learning model to automatically learn a dictionary of patches representative of one structure (e.g., red blood cells, white blood cells or platelets) and background artifacts from one or more holographic images of such structure, and a sparse encoding model to remove background artifacts from an image of one structure given a previously-learned dictionary for such structure and the background artifacts.

More specifically, sparse encoding is a model for representing images which makes the assumption that a small patch, *x,* taken from an image *(e.g.,* a patch of $20 \times 20$ pixels) can be well approximated by a weighted sum of predefined dictionary elements $d_1, d_2, \ldots, d_N$ (also referred to as "atoms") with coefficients $\alpha_1, \alpha_2, \ldots, \alpha_N$ as:

$$x \approx D\alpha = d_1\alpha_1 + d_2\alpha_2 + \cdots + d_N\alpha_N \qquad (1)$$

The atoms in the dictionary are assumed to be image patches that will be representative of all the various types of patches expected in holographic images of blood, including, for example, patches that contain red blood cells, white blood cells, platelets, and background. For example, a patch with a red blood cell is expected to be well approximated by a weighted sum of the dictionary patches that contain red blood cells. In such a case, the $\alpha$ coefficients corresponding to red blood cell atoms should be large, and the coefficients corresponding to other types of atoms should be small or zero. Mathematically, this is accomplished by solving an optimization problem of the form:

$$\min_{\alpha} E(x, D, \alpha) + \lambda R(\alpha) \tag{2}$$

where the $E(x, D, \alpha)$ function measures the squared error of how well the patch is approximated by the weighted combination of dictionary elements, and the second term (commonly referred to as a "sparse regularizer") is constructed to encourage solutions which use a small number of dictionary atoms (or equivalently $\alpha$ is "sparse," with most of its entries being exactly 0). When the input image and the dictionary contain only one structure plus background-$e.g.$, red blood cells + background-each red-blood-cell patch in an image is expected to be expressed in terms of red-blood-cell dictionary elements, while background patches in an image will be expressed in terms of background dictionary elements. By reconstructing all image patches in terms of red-blood-cell dictionary atoms only or in terms background atoms only, it is possible to decompose the input image as the sum of an image that contains primarily red blood cells (without artifacts) and another image that contains primarily background artifacts. In this way, an image of red blood cells can be obtained where twin-image artifacts have been eliminated. The same post-processing operation can be applied to images with other structures ($e.g.,$ white blood cells, platelets, etc.), provided that a suitable dictionary is available.

Given the above formulation for the sparse encoding problem, one is left with the question as to how to choose the dictionary. One possibility would be to manually select a large number of patches containing foreground and background, where the foreground contains the desired portion of the image and background contains the noise or artifacts that may obscure the desired portion. However, for holographic imaging better results may be achieved by learning a dictionary directly from the data itself. To accomplish this, dictionary learning techniques take as input a large number of patches extracted from example images and attempt to learn a suitable dictionary. Patch size may be selected to be approximately the same size as the objects of interest within the image. For example, the patch size may be selected to be at least as large as the largest object of interest with the image. Patches can be any size; for example, patches may be 3, 10, 15, 20, 30, 50, or 100 pixels in length and/or width, or any integer value therebetween, or larger. Patches may be partially overlapping or non-overlapping.

Regardless of patch size, using a large number of patches to train the dictionary will allow for all of the patches to be efficiently encoded via the sparse encoding framework described above. In particular, given $N$ patches extracted from one or more images, the dictionary $D$ can be learned by solving the following optimization problem:

$$\min_{\alpha, D} \sum_{i=1}^{N} E(x_i, D, \alpha_i) + \lambda R(\alpha_i) \tag{3}$$

where $x_i$ denotes the $i^{th}$ patch from one or more images, $D$ is the dictionary to be learned, and $\alpha_i$ denotes the coefficients encoding the $i^{th}$ patch. Once the dictionary has been learned, the learned dictionary patches are sorted into foreground elements, which correspond to the various cell types, and background elements, which correspond to the twin-image artifact. This sorting may be done automatically based on thresholding the $\ell_1$ norm of the individual dictionary elements.

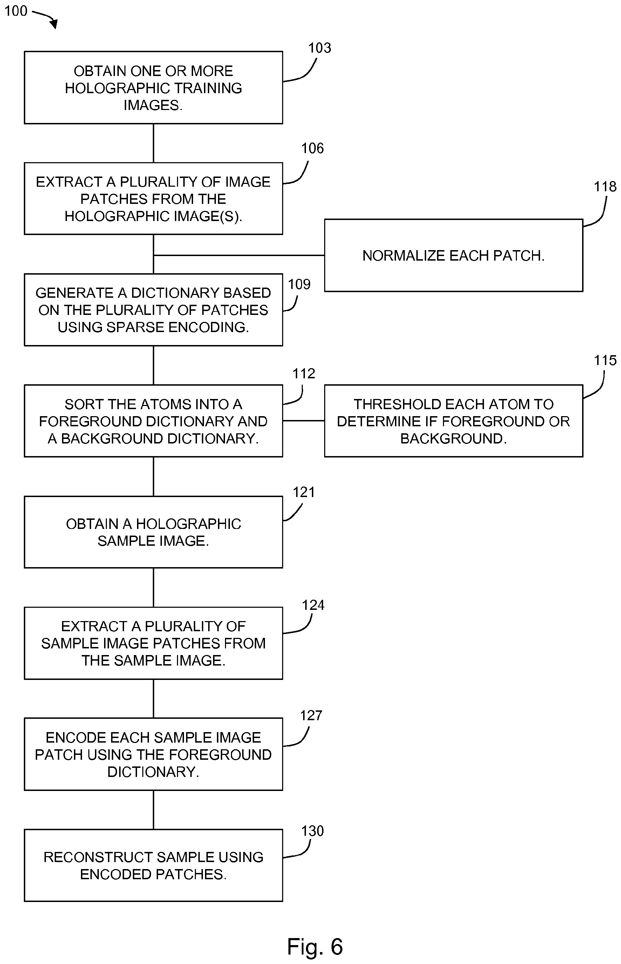

With reference to Figure 6, in an embodiment of the present disclosure, a method **100** for separating structures of interest in an image from background elements in the image includes obtaining **103** a holographic training image. In some embodiments, more than one holographic image may be used. A plurality of image patches is extracted **106** from the holographic image. An image patch (or simply, a patch) is a portion of an image. For example, in an image which is 640 pixels by 480 pixels in size, an image patch may be 20 pixels by 20 pixels in size. Other image and patch sizes may be used, and the images and patches are not constrained to these geometries ($e.g.,$ patches may not be square). The extracted **106** patches may be overlapping or non-overlapping. In an embodiment, the extracted **106** plurality of patches comprises a set of all possible patches within the holographic training image-$i.e.$, including overlapping patches. In some embodiments, the size of the patches used is pre-determined. In some embodiments, each patch of the plurality of patches is equal to the other patches.

Each patch of the plurality of patches may be normalized **118** to have zero mean and unit Euclidean norm.

As described above, a dictionary, $D,$ is generated **109** by solving the optimization problem given in (3). To solve (3), an initial training set of patches is provided, where the training patches are extracted from a single or multiple holographic images. Given the training patches, an initialization of the dictionary is generated using a specified number of dictionary elements. It has been found to be advantageous to specify the number of dictionary elements to be greater than the dimensionality of the image patches. For example, where the image patches are 20x20 pixels in size *(i.e.,* 400 total pixels per patch), the dictionary would advantageously contain more than 400 elements. Therefore, in some embodiments, the number of dictionary elements is greater than the dimensionality of the image patches. Exemplary initializations of the dictionary elements include, for example, initialization as random noise, as randomly selected patches from the training set, etc. Once the dictionary elements have been initialized, the sparse encoding problem (2) is solved using the initialized dictionary. After the sparse encoding problem has been solved, the dictionary elements are updated by solving for the optimal values of the dictionary elements in (3) with the sparse coefficients, $\alpha$, held fixed. The process of alternating between updating the sparse coefficients with the dictionary fixed and updating the dictionary with the sparse coefficients fixed is repeated until a sufficient solution has been found.

The method **100** further includes sorting **112** the atoms of the dictionary into two dictionaries: a foreground dictionary comprising a set of atoms relevant to structures of interest in the holographic image, and a background dictionary comprising a set of atoms relevant to background elements of the training image. The atoms of the dictionary are sorted **112** by thresholding **115** a measure of each atom. More particular, the $\ell_1$ norm of each atom is thresholded **115** and the atom is assigned to either the foreground dictionary or the background dictionary according to the results of the thresholding operation *(i.e.,* above or below a threshold value).

The method **100** may further include obtaining **121** a sample image. A plurality of sample image patches is extracted **124** from the sample image. In some embodiments, the extracted **124** plurality of sample image patches comprises all non-overlapping patches in the sample image. Each patch of the plurality of sample image patches is encoded **127** using the foreground dictionary. For example, each patch may be encoded **127** as a set of weighted atoms of the foreground dictionary using equation (2). A reconstructed image is generated **130** by assembling the encoded **127** patches.

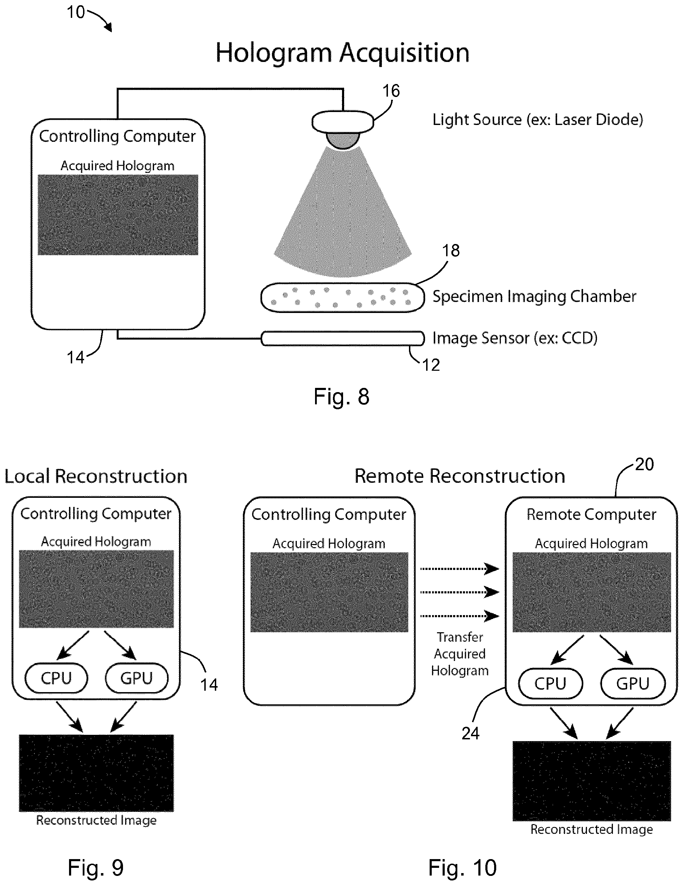

In another aspect of the present disclosure, a lens-free imaging system **10** is provided *(see* Figures 8-10). The system **10** includes an image sensor **12**, such as an active pixel sensor, a CCD, or a CMOS active pixel sensor, having a 2-dimensional array of detectors. The system **10** has a processor **14** for image reconstruction. The processor **14** may be programmed to perform any of the methods disclosed herein. For example, in an embodiment, the processor **14** is programmed to operate the image sensor **12** to obtain a holographic image. The processor **14** is further programmed to extract, from the holographic image, a plurality of patches, wherein the plurality of patches is a set of all fixed-size patches of the holographic image. The processor **14** generates a dictionary, D, comprising a plurality of atoms, wherein

$$\min_{\alpha,D} \sum_{i=1}^{N} E(x_i, D, \alpha_i) + \lambda R(\alpha_i)$$

the dictionary is generated by solving , where *N* is the number of patches in the plurality of patches, $x_i$ is the $i^{th}$ patch of the plurality of patches, $\alpha_i$ represents the coefficients encoding the $i^{th}$ patch, $E(x_i, D, \alpha_i)$ is a function measuring the squared error of the approximation of $x_i$ by the weighted combination of dictionary elements, and $\lambda R(\alpha_i)$ is a sparsity term.

The system **10** may be configured for "local" reconstruction, for example, where image sensor **12** and the processor **14** make up the system **10.** The system **10** may further include a light source **16** for illuminating the specimen. For example, the light source **16** may be a coherent light source, such as, for example, a laser diode providing coherent light. The system **10** may further include a specimen imaging chamber **18** configured to contain the specimen during acquisition of the hologram. In other embodiments (for example, as depicted in Figure 10), the system **20** is configured for remote" reconstruction, where the processor **24** is separate from the image sensor and receives information from the image sensor through, for example, a wired or wireless network connection, a flash drive, etc.

The processor may be in communication with and/or include a memory. The memory can be, for example, a Random-Access Memory (RAM) *(e.g.,* a dynamic RAM, a static RAM), a flash memory, a removable memory, and/or so forth. In some instances, instructions associated with performing the operations described herein (e.g., operate an image sensor, extract, from the holographic image, a plurality of patches) can be stored within the memory and/or a storage medium (which, in some embodiments, includes a database in which the instructions are stored) and the instructions are executed at the processor.

In some instances, the processor includes one or more modules and/or components. Each module/component executed by the processor can be any combination of hardware-based module/component *(e.g.,* a field-programmable gate array (FPGA), an application specific integrated circuit (ASIC), a digital signal processor (DSP)), software-based module *(e.g.,* a module of computer code stored in the memory and/or in the database, and/or executed at the processor), and/or a combination of hardware- and software-based modules. Each module/component executed by the processor is capable of performing one or more specific functions/operations as described herein. In some instances, the modules/components included and executed in the processor can be, for example, a process, application, virtual machine, and/or some other hardware or software module/component. The processor can be any suitable processor configured to run and/or execute those modules/components. The processor can be any suitable processing device configured to run and/or execute a set of instructions or code. For example, the processor can be a general purpose processor, a central processing unit (CPU), an accelerated processing unit (APU), a field-programmable gate array (FPGA), an application specific integrated circuit (ASIC), a digital signal processor (DSP), and/or the like.

Some instances described herein relate to a computer storage product with a non-transitory computer-readable medium (also can be referred to as a non-transitory processor-readable medium) having instructions or computer code thereon for performing various computer-implemented operations. The computer-readable medium (or processor-readable medium) is non-transitory in the sense that it does not include transitory propagating signals *per se (e.g.,* a propagating electromagnetic wave carrying information on a transmission medium such as space or a cable). The media and computer code (also can be referred to as code) may be those designed and constructed for the specific purpose or purposes. Examples of non-transitory computer-readable media include, but are not limited to: magnetic storage media such as hard disks, floppy disks, and magnetic tape; optical storage media such as Compact Disc/Digital Video Discs (CD/DVDs), Compact Disc-Read Only Memories (CD-ROMs), and holographic devices; magneto-optical storage media such as optical disks; carrier wave signal processing modules; and hardware devices that are specially configured to store and execute program code, such as Application-Specific Integrated Circuits (ASICs), Programmable Logic Devices (PLDs), Read-Only Memory (ROM) and Random-Access Memory (RAM) devices. Other instances described herein relate to a computer program product, which can include, for example, the instructions and/or computer code discussed herein.

Examples of computer code include, but are not limited to, micro-code or micro-instructions, machine instructions, such as produced by a compiler, code used to produce a web service, and files containing higher-level instructions that are executed by a computer using an interpreter. For example, instances may be implemented using Java, C++, .NET, or other programming languages (*e.g.,* object-oriented programming languages) and development tools. Additional examples of computer code include, but are not limited to, control signals, encrypted code, and compressed code.

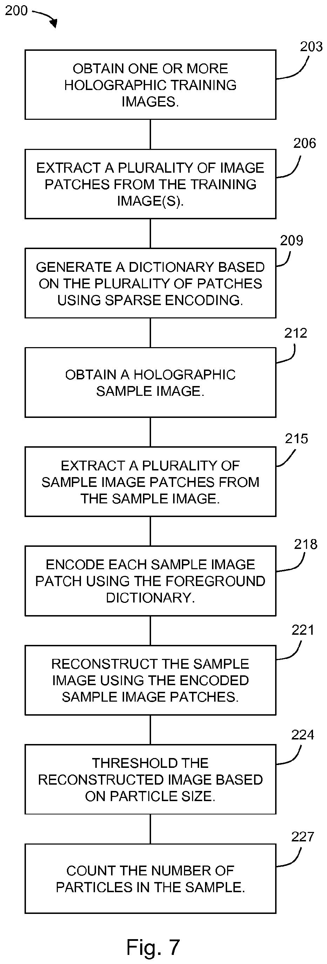

With reference to Figure 7, in another aspect, the present disclosure may be embodied as a method **200** for counting the number of discrete particles in a sample. The sample may be a biological specimen. The sample may be a fluid, such as, for example, blood. The method **200** includes obtaining **203** a holographic training image of the sample using lens-free imaging. For example, the training image may be obtained **203** using a CCD sensor and a coherent light source. In another example, the training image is obtained by retrieval from a storage device. A plurality of patches are extracted **206** from the holographic image, and a dictionary is generated **209** from the patches. The dictionary is generated **209** using the above-described techniques resulting in a sorted dictionary having foreground elements that correspond to the discrete particles. The method **200** includes obtaining **212** a holographic sample image of the sample. Here again, the sample image may be obtained **212** using a CCD sensor and a coherent light source to capture a holographic image of the sample or by retrieval from a storage device. Other methods of obtaining holographic image and sample image are known and will be apparent in light of the present disclosure.

A plurality of sample image patches are extracted **215** from the obtained **212** sample image. Each sample image patch is encoded **218** using the foreground elements of the dictionary and the sample image is reconstructed **221** using the encoded sample image patches. The number of particles in the reconstructed **221** sample image are counted **227.** In some embodiments the reconstructed **221** sample image is thresholded **224** to include particle sizes within a pre-determined range before the particles are counted **227.** For example, if the particles to be counted are red blood cells, the reconstructed sample image may be thresholded to include only those particles having a size within the range of sizes for red blood cells.

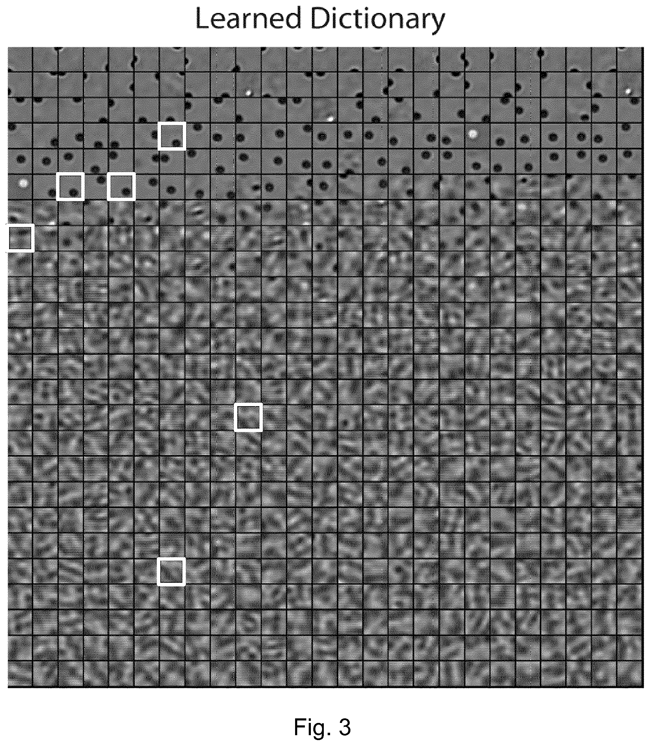

Applying these techniques to learn a dictionary from an image of whole blood collected via a lens-free imaging system, one can observe that the learned dictionary is easily sorted into dictionary elements which correspond to the foreground cells and elements which correspond to the background twin-image artifact (*see* Figure 3). After the dictionary has been learned and sorted, individual images can then be encoded using the sparse encoding approach discussed earlier. Note that because the reconstructed image is formed by taking a weighted sum of the dictionary elements, by only including foreground ("cell") or background dictionary elements in the reconstruction one can, in an unsupervised fashion, separate the original image into the component of the image that corresponds to true specimen and the portion of the image that corresponds to the background, thus removing the twin-image artifact found in the background from the original image.

**Further Discussion and Examples**

At a high level the present approach can be viewed in three main steps. First, sparse dictionary learning techniques are used to learn a suitable representation for the images in a dataset. Then, the learned dictionary may be separated into elements corresponding to either the true image or the twin-image. Finally, this learned and separated dictionary may be used to decompose new images into two components: one containing the true image and the other one containing the twin-image artifact. As is shown in the experiments described below, this decomposition allows one to accurately count the number of red blood cells in a holographic image via a simple thresholding approach applied to the true image.

*Holographic Image Collection and Reconstruction*

The proposed approach will be illustrated in an exemplary embodiment using 296 images of diffraction holograms taken of anti-coagulated human blood from 5 healthy volunteers (approximately 60 images per donor) diluted at a 300:1 ratio suspended in a micro-fluidic channel using a lens-free imaging system. After the images were acquired, the appropriate focal depth of the images was determined and the images were reconstructed using a known wide-angular spectrum approximation for the image diffraction process. Specifically, if $H \in \mathbb{R}^{h \times w}$ is the recorded hologram (the square-root of the raw pixel values since, in this exemplary embodiment, a CCD was used which records the squared amplitude of the wavefront), the image $Y \in \mathbb{R}^{h \times w}$ was reconstructed as

$$Y = |T(z) * H| = \left| \mathcal{F}^{-1} \{ \mathcal{F}\{T(z)\} \odot \mathcal{F}\{H\} \} \right|. \tag{4}$$

Here $*$ is the 2D convolution operator, $\odot$ is an element-wise multiplication, $\mathcal{F}$ is the 2D discrete Fourier transform, and $T(z)$ is the wide-angular spectrum transfer function for a focal depth $z$, whose Fourier transform is given by

$$\mathcal{F}(T(z))[k_x, k_y] = \begin{cases} \exp(iz \sqrt{k^2 - k_x^2 - k_y^2}) & k_x^2 + k_y^2 \leq k^2 \\ 0 & \text{otherwise} \end{cases}, \tag{5}$$

where $k = 2\pi/\lambda$ is the wavenumber for light with wavelength $\lambda$.

The top row of Figure 2 shows sample reconstructed images. Note that cells (predominately red blood cells) are clearly visible as dark objects in the image. However, there is also a significant amount of twin-image artifact, which manifests as wave-like distortions emanating from the cells. To minimize the effects of these distortions the presently-disclosed sparse dictionary learning and coding method was employed.

Small image patches (*e.g.,* 20x20 pixels) were extracted from an image are modeled as a linear combination of elements (also referred to as atoms or components) from a dictionary. The total number of elements in the dictionary can potentially be very large, for example larger than the dimensionality of the extracted patches, in which case the dictionary is over-complete. Therefore, the model also seeks to find sparse solutions, which limit the number of dictionary elements used to represent any given patch (or the number dictionary elements used is sparse). Specifically, given a suitable dictionary, $D \in \mathbb{R}^{m \times n}$, *a priori,* then the goal of the sparse coding model is to solve a problem of the form

$$\min_{\alpha} \frac{1}{2} \|x - D\alpha\|_2^2 + \gamma \|\alpha\|_1, \tag{6}$$

where $x \in \mathbb{R}^m$ is a patch extracted from the image, the $\ell_1$ norm was used as a regularization function to encourage sparse solutions, and $\gamma$ is a non-negative scalar that balances the trade-off between fitting the data and promoting sparse solutions. Note that there are many potential sparse coding models possible, but (6) describes the well-known Lasso or Matching Pursuit model used in the present non-limiting example. The above formulation is convex in $\alpha$ and easily solved by many efficient algorithms; however, typically one does not necessarily know an optimal dictionary, *D, a priori.* As a result, the dictionary learning problem takes a collection of *N* patches, $A \in \mathbb{R}^{m \times N}$, extracted from an image (or a collection of images) and seeks to solve an optimization problem jointly over both the encoding variables, $A \in \mathbb{R}^{m \times N}$, and dictionary, $D \in \mathbb{R}^{m \times r}$, of the form

$$\min_{D,A} \frac{1}{2} \|X - DA\|_F^2 + \gamma \|A\|_1 \quad \text{such that} \quad \|D_i\|_2 = 1 \forall_i \in [1, r]. \tag{7}$$

*Illustrative Example*

This general dictionary learning framework was applied to images reconstructed from diffraction holograms using the standard holographic reconstruction techniques described above. To learn the dictionary, all possible patches of size 20x20 pixels (which are larger than the typical size of blood cells) were extracted from a 512x512 crop from a single image using a sliding window with a stride of 1. The patches were then normalized to have zero mean and unit $\ell_2$ norm. The dictionary was then learned using the publicly available SPAMS software package with the parameter $\gamma$ set to 0.15 in (7). Figure 3 shows the result from learning a dictionary with 625 atoms. Note that many of the learned dictionary atoms correspond to cells (approximately top 5 rows), while the rest correspond to the wave-like distortions that result from the twin-image artifact. Note that the dictionary shown in Figure 3 was automatically sorted to identify atoms that correspond to cells versus artifacts by using a process described next.

*Dictionary Separation*

Once the dictionary has been trained, it was automatically separated into atoms that correspond to "cells" (since the images are of human blood) and atoms that correspond to the "background," which are largely due to the twin-image artifact. Specifically, by taking patches of size 20x20, cell atoms only contain a small portion of the patch which is significantly different from the background intensity, whereas background atoms are characterized by wave-like components at various orientations typical of the twin-image artifact, which are largely different from the background intensity at every pixel. This suggests that cell dictionary atoms are sparser than background dictionary atoms, and due to the fact that the formulation in (7) constrains the dictionary atoms to be of unit $\ell_2$ norm, simply sorting the dictionary atoms based on their $\ell_1$ norms produced a robust separation between cell atoms and background atoms as shown in Figure 3. Using the segmentation of the dictionary atoms into cell and background atoms, new images were decomposed into cell and background images as described next.

*Image Decomposition*

Once the learned dictionary had been separated into cell and background components, new images were processed by encoding 20x20 patches extracted from the image via the sparse coding formulation given in (6). Then, the reconstructed image was approximated as a decomposition into cell and background component images using the corresponding dictionary elements and sparse coefficients. Specifically, given a sorted dictionary, $D = [D_{cell} \ D_{back}]$, the problem in (6) is solved for all the patches in an image, producing sparse coefficients which likewise correspond to cell and background components, $A = [A_{cell}^T \ A_{back}^T]^T$. From this representation, the cell and background components of the image were reconstructed from the patch decompositions $D_{cell}A_{cell}$ and $D_{back}A_{back}$, respectively. Examples of this decomposition are shown in the second and third rows of Figure 2. These images were created by extracting and encoding all possible patches in the original image using a sliding window with a stride of 1 and then reconstructing the images by returning the patches to their original locations and taking the mean of the pixels across patches where the overlapped. To reconstruct images for estimating red blood cell concentrations the patches were extracted using a non-overlapping sliding window with a stride of 20 to improve the computational efficiency of the method. Note that in general the twin-image background artifact is largely removed from the cell images. The most prominent artifacts still remaining in the cell image are areas of the twin image that happen to be largely circular and hence can be efficiently represented by the circular cell dictionary atoms.

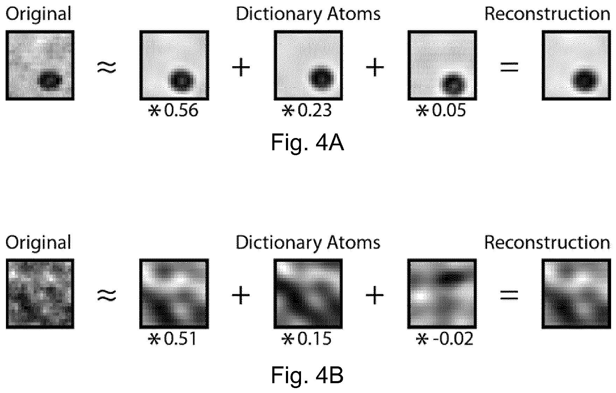

Figures 4A and 4B depict/illustrate an exemplary reconstruction of an image patch containing a red blood cell (top left panel), and an image patch containing just background (bottom left panel). Proceeding from left to right, the original image patch is approximated as the weighted sum of the dictionary atoms (for these two patches, both patches were approximated using 3 dictionary atoms) which produces the reconstructed patch (right panels). The dictionary atoms used for the reconstruction were those highlighted with thick borders in Figure 3. As can be seen from visual inspection, the reconstructed image of the red blood cell has better resolution than the image.

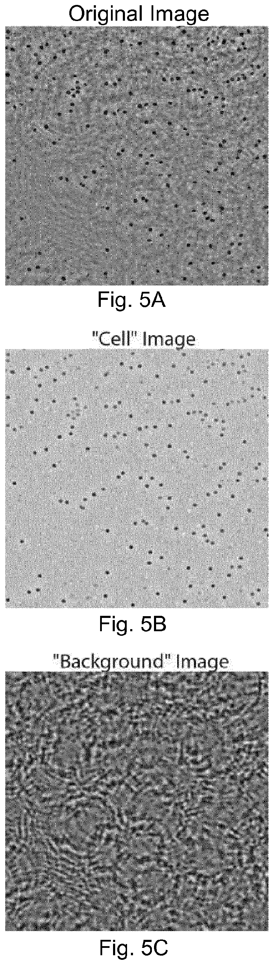

Figures 5A to 5C depict/illustrate, respectively, a portion of an original image reconstructed by standard lens free imaging, the portion of the image as it has been further reconstructed using a structure image dictionary of the red blood cells obtained in the present example, (also referred to as an true image dictionary, cell or "T" dictionary), and the image that has been reconstructed using the background dictionary obtained in the example. As can be seen from visual inspection, the reconstructed image of using the cell dictionary is superior in clarity than the original reconstruction technique.

To evaluate the effectiveness of the present approach on a medically significant task, the presently-disclosed image decomposition algorithm was used to estimate the concentration of red blood cells from lens-free holographic images. After applying the image decomposition algorithm described above, the number of blood cells present in a given image was estimated by thresholding the cell component image and counting the number of particles greater than a given size in the thresholded image. Using the estimated number of cells in a given image, the red blood cell concentration for a given image was estimated from the volume of the micro-fluidic channel, the known dilution factor, and the estimated number of cells present in the image. The red blood cell concentration for a particular blood donor was estimated by taking the median of the estimated red blood cell concentrations over approximately 60 images of blood collected from the donor (the number of images per donor ranged from 58-62). To establish a baseline for the present image decomposition technique, red blood cell concentrations were also estimated by thresholding the original reconstructed images. In both cases, the value of the threshold and the minimum particle size were chosen via leave-one-donor-out cross validation by comparing red blood cell concentrations estimated from the lens-free images to red blood cell concentrations measured via a laboratory hematology analyzer. The cross validation errors for each of the five donors is shown in Table 1. Note that the presently-disclosed method significantly improves the accuracy and reliability of estimating red blood cell concentration over using the original reconstructed image.

**Table 1.** Cross-validation errors in red blood cell concentration estimation using thresholding of original and cell images.

| Donor | Original image error | Cell image error (present method) |
|---|---|---|
| 1 | -52.1% | 4.9% |
| 2 | 4.8% | -0.6% |
| 3 | -0.3% | -8.0% |
| 4 | -44.4% | -1.5% |
| 5 | 189.5% | 2.9% |
| Mean 1% Errorl | 19.5% | 3.6% |

In another exemplary embodiment, after the original image was separated into the cell and background images, a final count may be performed by thresholding the "cell" image and counting the number of particles that have an area within a given range of sizes. The value of the thresholding parameter was set via leave-one-out cross validation while the size ranges were selected to roughly correspond to the size of the various types of cells-red blood cells, white blood cells, and platelets.

The algorithm proceeds to estimate cell counts for the three types of cells, with the only difference being the choice of dictionary and the values of the particle size and thresholding parameters. For red and white blood cell counts the dictionary shown in Figure 3 was used. For platelet counts the dictionary was augmented with an additional 200 dictionary elements that were obtained via dictionary learning on lens free images of purified platelets, and the cell image used for the final thresholding and counting constructed using just these 200 platelet elements.

Those of ordinary skill would understand the term "foreground" to be the portion of an image that is of interest to the user. By way of example, the foreground of an image of whole blood may include the portion of the image that depicts a red blood cell, white blood cell, or platelet, and foreground dictionary (also referred to as a true image dictionary or T dictionary) would be dictionary formed from the portions of an image or images that correspond to portions of the images that contain the portion of the image(s) of interest to the user. Similarly, those of ordinary skill would understand the terms background and artifact to refer to the portions of an image that are not of interest or use to the user. For example, in a lens-free image of a whole blood cell, a part of the background is the twin-image artifact. In addition, those of ordinary skill would understand the term "thresholding" as a method of image segmentation, whether simple, histogram-based or other statistical model is used.

With respect to the instant specification, the following description will be understood by those of ordinary skill such that the images referred to herein do not need to be displayed at any point in the method, and instead represent a file or files of data produced using one or more lens-free imaging techniques, and the steps of restructuring these images mean instead that the files of data are transformed to produce files of data that can then be used to produce clearer images or, by statistical means, analyzed for useful output. For example, an image file of a sample of blood may be captured by lens free imaging techniques. This file would be of a diffraction pattern that would then be mathematically reconstructed into second file containing data representing an image of the sample of blood. The second file could replace the first file or be separately stored in a computer readable media. Either file could be further processed to more accurately represent the sample of blood with respect to its potential visual presentation, or its usefulness in terms of obtaining a count of the blood cells (of any type) contained in the sample. The storage of the various files of data would be accomplished using methods typically used for data storage in the image processing art.

**Claims**

1. A system (10) for holographic lens-free imaging, comprising:

an image sensor (12);
a processor (14) in communication with the image sensor (12); and
a computer-readable storage medium having stored thereon instructions which, when executed by the processor (12), causes the processor (12) to:

reconstruct pixel data obtained by the image sensor (12) into a holographic image;
extract, from the holographic image, a plurality of patches, being portions of the image, wherein the plurality of patches is a set of all fixed-size patches of the holographic image; and
generate a dictionary, D, comprising a plurality of dictionary elements, wherein the dictionary is generated by solving the optimization problem

$$\min_{\alpha,D} \sum_{i=1}^{N} E(x_i, D, \alpha_i) + \lambda R(\alpha_i),$$

where $N$ is the number of patches in the plurality of patches, $x_i$ is the $i^{\text{th}}$ patch of the plurality of patches, $\alpha_i$ represents the coefficients encoding the $i^{\text{th}}$ patch, $E(x_i, D, \alpha_i)$ is a function measuring the squared error of the approximation of $x_i$ by the weighted sum of dictionary elements with coefficients $\alpha_i$, and $\lambda R(\alpha_i)$ is sparsity term.

2. The system (10) of claim 1, wherein the image sensor (12) is an active pixel sensor, a CCD, or a CMOS active pixel sensor.

3. A method (100, 200) for separating cell structure in a holographic image from background elements in the holographic image, comprising:

obtaining (103, 203) a holographic image;
extracting (106, 206), from the holographic image, a plurality of patches, being portions of the image;
generating (109, 209) a dictionary D comprising a plurality of dictionary elements, wherein the dictionary is generated by solving the optimization problem

$$\min_{\alpha,D} \sum_{i=1}^{N} E(x_i, D, \alpha_i) + \lambda R(\alpha_i),$$

where $N$ is the number of patches in the plurality of patches, $x_i$ is the $i^{\text{th}}$ patch of the plurality of patches, $\alpha_i$ represents the coefficients encoding the $i^{\text{th}}$ patch, $E(x_i, D, \alpha_i)$ is a function measuring the squared error of the approximation of $x_i$ by the weighted sum of dictionary elements with coefficients $\alpha_i$, and $\lambda R(\alpha_i)$ is a sparsity term; and
sorting (112) the dictionary elements of the dictionary into a foreground dictionary comprising a set of dictionary elements relevant to structures of interest in the holographic image, and a background dictionary comprising a set of dictionary elements relevant to background elements of the holographic image;
wherein the act of sorting (112) comprises thresholding (115) a $\ell_1$ norm of each dictionary element of the dictionary, wherein each dictionary element is assigned to either the foreground dictionary or the background dictionary based on a comparison of the $\ell_1$ norm with a threshold value.

4. The method (100, 200) of claim 3, wherein the holographic image is an image of whole blood, each dictionary element of the foreground dictionary being a red blood cell, a white blood cell, or a platelet.

5. The method (100, 200) of any of claims 3 or 4, wherein the dictionary is generated from more than one holographic image.

6. The method (100, 200) of any of claims 3 to 5, further comprising normalizing (118) each patch of the plurality of patches to have zero mean and unit Euclidean norm.

7. The method (100, 200) of any of claims 3 to 6, further comprising:

obtaining (121, 212) a sample holographic image;

extracting (124, 215), from the sample holographic image, a plurality of sample image patches, wherein the set of sample image patches comprises all non-overlapping patches in the sample holographic image; and

encoding (127, 218) each patch of the plurality of sample image patches using the foreground dictionary; and

generating (130, 221) a reconstructed image of the sample image using the encoded patches.

8. The method (100, 200) of claim 7, wherein each patch is encoded according to $\min_{\alpha} E(x, D_F, \alpha) + \lambda R(\alpha)$ .

9. The method (100, 200) of claim 7 or 8, wherein the dictionary comprises foreground elements that correspond to discrete particles, the method (100, 200) further comprising:

counting (227) the number of particles in the reconstructed sample image.

10. The method (100, 200) of claim 9, further comprising thresholding (224) the reconstructed sample image to include particle sizes within a pre-determined range.

11. The method (100, 200) of claim 9 or 10, wherein the sample is whole blood or plasma, the particles optionally being red blood cells, white blood cells or platelets.

**Patentansprüche**

1. System (10) zur holographischen linsenlosen Bildgebung, umfassend:

einen Bildsensor (12);

einen Prozessor (14) in Kommunikation mit dem Bildsensor (12); und

ein computerlesbares Speichermedium, das darauf gespeicherte Anweisungen aufweist, die bei Ausführung durch den Prozessor (12) bewirken, dass der Prozessor (12) ausführt:

Rekonstruieren von Pixeldaten, die durch den Bildsensor (12) erhalten wurden, zu einem holographischen Bild;

Extrahieren einer Vielzahl von Patches, die Abschnitte des Bildes sind, aus dem holographischen Bild, wobei die Vielzahl von Patches ein Satz von allen Patches mit fester Größe von dem holographischen Bild ist; und

Generieren eines Lexikons, D, das eine Vielzahl von Lexikonelementen umfasst, wobei das Lexikon durch Lösen des folgenden Optimierungsproblems generiert wird:

$$\min_{\alpha,D} \sum_{i=1}^{N} E(x_i, D, \alpha_i) + \lambda R(\alpha_i),$$

wobei N die Anzahl der Patches in der Vielzahl von Patches ist, $x_i$ der i. Patch von der Vielzahl von Patches ist, $\alpha_i$ die Koeffizienten repräsentiert, die den i. Patch kodieren, $E(x_i, D, \alpha_i)$ eine Funktion ist, welches den quadratischen Fehler der Näherung von $x_i$ durch die gewichtete Summe der Lexikonelemente mit den Koeffizienten $\alpha_i$ misst, und $\lambda R(\alpha_i)$ ein Seltenheitsterm (Sparsity-Term) ist.

2. System (10) nach Anspruch 1, wobei der Bildsensor (12) ein Aktivpixelsensor, ein CCD- oder ein CMOS-Aktivpixelsensor ist.

3. Verfahren (100, 200) zum Separieren von Zellstruktur in einem holographischen Bild von Hintergrundelementen in dem holographischen Bild, umfassend:

Erhalten (103, 203) eines holographischen Bildes;

Extrahieren (106, 206) einer Vielzahl von Patches, die Abschnitte des Bildes sind, aus dem holographischen Bild;

Generieren (109, 209) eines Lexikons D, das eine Vielzahl von Lexikonelementen umfasst, wobei das Lexikon durch Lösen des folgenden Optimierungsproblems generiert wird:

$$\min_{\alpha,D} \sum_{i=1}^{N} E(x_i, D, \alpha_i) + \lambda R(\alpha_i),$$

wobei N die Anzahl der Patches in der Vielzahl von Patches ist, $x_i$ der i. Patch von der Vielzahl von Patches ist, $\alpha_i$ die Koeffizienten repräsentiert, die den i. Patch kodieren, $E(x_i, D, \alpha_i)$ eine Funktion ist, welche den quadratischen Fehler der Näherung von $x_i$ durch die gewichtete Summe der Lexikonelemente mit den Koeffizienten $\alpha_i$ misst, und $\lambda R(\alpha_i)$ ein Sparsity-Term ist; und

Sortieren (112) der Lexikonelemente des Lexikons zu einem Vordergrundlexikon, umfassend einen Satz von Lexikonelementen, die für interessierende Strukturen in dem holographischen Bild relevant sind, und einem Hintergrundlexikon, umfassend einen Satz von Lexikonelementen, die für Hintergrundelemente des holographischen Bildes relevant sind;

wobei der Akt des Sortierens (112) Schwellenwertbildung (115) einer $\ell_1$-Norm von jedem Lexikonelement des Lexikons umfasst, wobei jedes Lexikonelement basierend auf einem Vergleich der $\ell_1$-Norm mit einem Schwellenwert entweder dem Vordergrundlexikon oder dem Hintergrundlexikon zugewiesen wird.

4.  Verfahren (100, 200) nach Anspruch 3, wobei das holographische Bild ein Bild von Vollblut ist, wobei jedes Lexikonelement des Vordergrundlexikons ein Erythrozyt, ein Leukozyt oder ein Thrombozyt ist.

5.  Verfahren (100, 200) nach einem der Ansprüche 3 oder 4, wobei das Lexikon aus mehr als einem holographischen Bild generiert wird.

6.  Verfahren (100, 200) nach einem der Ansprüche 3 bis 5, des Weiteren umfassend Normalisieren (118) jedes Patches von der Vielzahl von Patches, so dass sie einen Mittelwert von Null und Einheitsvarianz nach Euklidischer Norm haben.

7.  Verfahren (100, 200) nach einem der Ansprüche 3 bis 6, des Weiteren umfassend:

Erhalten (121, 212) eines holographischen Probenbildes;
Extrahieren (124, 215) einer Vielzahl von Probenbild-Patches aus dem holographischen Probenbild, wobei der Satz von Probenbild-Patches alle nichtüberlappenden Patches in dem holographischen Probenbild umfasst; und
Kodieren (127, 218) jedes Patches von der Vielzahl von Probenbild-Patches unter Verwendung des Vordergrundlexikons; und
Generieren (130, 221) eines rekonstruierten Bildes des Probenbildes unter Verwendung der kodierten Patches.

8.  Verfahren (100, 200) nach Anspruch 7, wobei jeder Patch gemäß $\min_{\alpha} E(x, D_F, \alpha) + \lambda R(\alpha)$ kodiert wird.

9.  Verfahren (100, 200) nach Anspruch 7 oder 8, wobei das Lexikon Vordergrundelemente umfasst, die diskreten Partikeln entsprechen, wobei das Verfahren (100, 200) des Weiteren umfasst:
Zählen (227) der Anzahl von Partikeln in dem rekonstruierten Probenbild.

10. Verfahren (100, 200) nach Anspruch 9, des Weiteren umfassend Schwellenwertbildung (224) des rekonstruierten Probenbildes, um Partikelgrößen innerhalb eines vorbestimmten Bereichs einzuschließen.

11. Verfahren (100, 200) nach Anspruch 9 oder 10, wobei die Probe Vollblut oder Plasma ist, wobei die Partikel gegebenenfalls Erythrozyten, Leukozyten oder Thrombozyten sind.

**Revendications**

1.  Système (10) d'imagerie holographique sans lentille, comprenant :

un capteur d'image (12) ;
un processeur (14) en communication avec le capteur d'image (12) ; et
un support de stockage lisible par ordinateur sur lequel sont stockées des instructions qui, lorsqu'elles sont exécutées par le processeur (12), amènent le processeur (12) à :

reconstruire les données de pixel obtenues par le capteur d'image (12) en une image holographique ;
extraire de l'image holographique une pluralité de zones, qui sont des parties de l'image, où la pluralité de zones est un ensemble de toutes les zones de taille fixe de l'image holographique ; et
générer un dictionnaire, D, comprenant une pluralité d'éléments de dictionnaire, où le dictionnaire est généré en résolvant le problème d'optimisation suivant :

$$\min_{\alpha,D} \sum_{i=1}^{N} E(x_i, D, \alpha_i) + \lambda R(\alpha_i),$$

où $N$ est le nombre de zones dans la pluralité de zones, $x_i$ est la $i^{ème}$ zone de la pluralité d'échantillons, $\alpha_i$ représente les coefficients codant la $i^{ème}$ zone, $E(x_i, D, \alpha_i)$ est une fonction mesurant l'erreur quadratique de l'approximation de $x_i$ par la somme pondérée des éléments de dictionnaire ayant les coefficients $\alpha_i$, et $\lambda R(\alpha_i)$ est un terme d'éparpillement.

2. Système (10) selon la revendication 1, dans lequel le capteur d'image (12) est un capteur à pixel actif, un CCD, ou un capteur à pixel actif CMOS.

3. Procédé (100, 200) pour séparer une structure cellulaire dans une image holographique d'éléments d'arrière-plan dans l'image holographique, le procédé comprenant les étapes suivantes :

   obtenir (103, 203) une image holographique ;
   extraire (106, 206) de l'image holographique une pluralité de zones, qui sont des parties de l'image ;
   générer (109, 209) un dictionnaire, D, comprenant une pluralité d'éléments de dictionnaire, où le dictionnaire est généré en résolvant le problème d'optimisation suivant :

$$\min_{\alpha,D} \sum_{i=1}^{N} E(x_i, D, \alpha_i) + \lambda R(\alpha_i),$$

   où N est le nombre de zones dans la pluralité de zones, $x_i$ est la $i^{ème}$ zone de la pluralité de zones, $\alpha_i$ représente les coefficients codant la $i^{ème}$ zone, $E(x_i, D, \alpha_i)$ est une fonction mesurant l'erreur quadratique de l'approximation de $x_i$ par la somme pondérée des éléments de dictionnaire ayant les coefficients $\alpha_i$, et $\lambda R(\alpha_i)$ est un terme d'éparpillement ; et
   trier (112) les éléments de dictionnaire du dictionnaire en un dictionnaire de premier plan comprenant un ensemble d'éléments de dictionnaire pertinents pour les structures d'intérêt dans l'image holographique, et un dictionnaire d'arrière-plan comprenant un ensemble d'éléments de dictionnaire pertinents pour les éléments d'arrière-plan de l'image holographique ;
   où l'acte de tri (112) comprend le seuillage (115) d'une norme $\ell_1$ de chaque élément de dictionnaire du dictionnaire, où chaque élément de dictionnaire est affecté soit au dictionnaire de premier plan, soit au dictionnaire d'arrière-plan sur la base d'une comparaison de la norme $\ell_1$ avec une valeur de seuil.

4. Procédé (100, 200) selon la revendication 3, dans lequel l'image holographique est une image de sang entier, chaque élément de dictionnaire du dictionnaire de premier plan étant un globule rouge, un globule blanc ou une plaquette.

5. Procédé (100, 200) selon l'une quelconque des revendications 3 ou 4, dans lequel le dictionnaire est généré à partir de plus d'une image holographique.

6. Procédé (100, 200) selon l'une quelconque des revendications 3 à 5, comprenant en outre la normalisation (118) de chaque zone de la pluralité de zones pour avoir une moyenne nulle et une norme euclidienne unitaire.

7. Procédé (100, 200) selon l'une quelconque des revendications 3 à 6, comprenant en outre les étapes suivantes :

   obtenir (121, 212) une image holographique d'échantillon ;
   extraire (124, 215) de l'image holographique d'échantillon une pluralité de zones d'image d'échantillon, dans laquelle l'ensemble de zones d'image d'échantillon comprend toutes les zones non chevauchantes dans l'image holographique d'échantillon ; et

coder (127, 218) chaque zone de la pluralité de zones d'image d'échantillon en utilisant le dictionnaire de premier plan ; et

générer (130, 221) une image reconstruite de l'image d'échantillon en utilisant les zones codées.

8. Procédé (100, 200) selon la revendication 7, dans lequel chaque zone est codée selon la formule suivante : $min_\alpha E(x, D_F, \alpha) + \lambda R(\alpha)$.

9. Procédé (100, 200) selon la revendication 7 ou la revendication 8, dans lequel le dictionnaire comprend des éléments de premier plan qui correspondent à des particules discrètes, le procédé (100, 200) comprenant en outre l'étape suivante :

compter (227) le nombre de particules dans l'image échantillon reconstruite.

10. Procédé (100, 200) selon la revendication 9, comprenant en outre le seuillage (224) de l'image échantillon reconstruite pour inclure des tailles de particules dans une plage prédéterminée.

11. Procédé (100, 200) selon la revendication 9 ou la revendication 10, dans lequel l'échantillon est du sang total ou du plasma, les particules étant éventuellement des globules rouges, des globules blancs ou des plaquettes.

Fig. 1

Fig. 2

Learned Dictionary

Fig. 3

Fig. 4A

Fig. 4B

Original Image

Fig. 5A

"Cell" Image

Fig. 5B

"Background" Image

Fig. 5C

Fig. 6

200

203

OBTAIN ONE OR MORE
HOLOGRAPHIC TRAINING
IMAGES.

206

EXTRACT A PLURALITY OF IMAGE
PATCHES FROM THE TRAINING
IMAGE(S).

209

GENERATE A DICTIONARY BASED
ON THE PLURALITY OF PATCHES
USING SPARSE ENCODING.

212

OBTAIN A HOLOGRAPHIC
SAMPLE IMAGE.

215

EXTRACT A PLURALITY OF
SAMPLE IMAGE PATCHES FROM
THE SAMPLE IMAGE.

218

ENCODE EACH SAMPLE IMAGE
PATCH USING THE FOREGROUND
DICTIONARY.

221

RECONSTRUCT THE SAMPLE
IMAGE USING THE ENCODED
SAMPLE IMAGE PATCHES.

224

THRESHOLD THE
RECONSTRUCTED IMAGE BASED
ON PARTICLE SIZE.

227

COUNT THE NUMBER OF
PARTICLES IN THE SAMPLE.

Fig. 7

10

# Hologram Acquisition

16

Controlling Computer

Acquired Hologram

Light Source (ex: Laser Diode)

18

Specimen Imaging Chamber

Image Sensor (ex: CCD)

14

12

## Fig. 8

## Local Reconstruction

Controlling Computer

Acquired Hologram

CPU    GPU    14

Reconstructed Image

## Fig. 9

## Remote Reconstruction

20

Controlling Computer

Acquired Hologram

Transfer
Acquired
Hologram

Remote Computer

Acquired Hologram

CPU    GPU

24

Reconstructed Image

## Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JUN SONG et al.** Sparsity-Based Pixel Super Resolution for Lens-Free Digital In-line Holography. *SCIENTIFIC REPORTS,* 21 April 2016, vol. 6 (1

- An efficient dictionary learning algorithm for 3d Medical Image Denoising based on Sadct. **THILAGAVATHI M et al.** INFORMATION COMMUNICATION AND EMBEDDED SYSTEMS (ICICES), 2013 INTERNATIONAL CONFERENCE ON. IEEE, 21 February 2013, 442-447